# EUROPÄISCHE PATENTSCHRIFT

(11) **EP 0 632 158 B1**
(45) Veröffentlichungstag und Bekanntmachung des Hinweises auf die Patenterteilung: **10.09.1997**
(21) Anmeldenummer: 94108831.2
(22) Anmeldetag: 09.06.1994
(51) Int. Cl.: D21C 5/02, D21C 9/08

(54) **Verfahren zur Aufbereitung von Altpapier**
Process for the treatment of waste paper
Procédé pour le traitement de vieux papier

(30) Priorität: 29.06.1993 DE 4321521
(43) Veröffentlichungstag der Anmeldung: 04.01.1995
(73) Patentinhaber: J.M. Voith GmbH, D-89522 Heidenheim (DE)
(72) Erfinder: Pfalzer, Lothar, Dr., D-89518 Heidenheim (DE); Ortner, Herbert, Dr., D-89522 Heidenheim (DE); Schweiss, Peter, D-89275 Elchingen (DE)
(74) Vertreter: Weitzel, Wolfgang, Dr.-Ing. Patentanwalt

(56) Entgegenhaltungen:
- DE-A- 3 527 389
- DE-C- 405 218
- PATENT ABSTRACTS OF JAPAN vol. 16, no. 548 (C-1005) 18. November 1992 & JP-A-04 209 880 (KANZAKI PAPER MFG. CO. LTD.) 31. Juli 1992
- DATABASE WPI Section Ch, Week 9329, Derwent Publications Ltd., London, GB; Class F09, AN 93-232903 & JP-A-5 156 584 (HONSHU PAPER MFG. CO. LTD.) 22. Juni 1993

## Beschreibung

Die Erfindung betrifft ein Verfahren zur Aufbereitung von Altpapier, das zu einem starken Anteil wachsbeschichtet ist.

Viele Verfahren der Altpapieraufbereitung benützen die Flotation im wesentlichen, um Druckfarben aus der Altpapiersuspension heraus zu flotieren. Die Auflösung im Stofflöser geschieht im allgemeinen höchstens bei Temperaturen von 60°C; eine Ausnahme bildet die Aufbereitung von naßfesten Papiersorten, wofür man in hohen Energieaufwand bei Temperaturen von bis zu mehr als 100°C als gerechtfertigt ansehen kann.

Aus der JP-A-04 209 880 ist ein Flotationsverfahren zur Aufarbeitung beschichteter, sogennanter Reliespapiere bekannt.

Aus der DE-A-405 218 ist ein Verfahren zur Rückgewinnung von in Altpapier enthaltenen fettartigen Stoffen, z.B. Paraffin, bekannt. Die zerkleinerten Papierabfälle zusammen mit dem heißen Wasser, im Falle Paraffin heißer als der bei etwa 60°C liegende Schmelzpunkt, werden in einem Behälter, gegebenfalls unter Zerfaserung, in Bewegung gehalten und hierbei durch ein oben im Behälter angebrachtes Sieb am Aufsteigen gehindert, so daß nur das geschmolzene Fett durch das Sieb hindurchtritt und von dort entfernt wird.

Erfindungsgemäß besteht die Aufgabe, den Wachsanteil aus dem Altpapier möglichst weitgehend zu entfernen.

Diese Aufgabe wird erfindungsgemäß durch die Merkmale des kennzeichnenden Teils des Patentanspruchs 1 gelöst. Bei dem erfindungsgemäßen Verfahren erreicht man praktisch eine Art Dispergierung des Wachses im Stofflöser und ferner liegt praktisch das Wachs bei der Flotation, die im Temperaturbereich des Wachsschmelzpunktes durchgeführt wird, in "freier Form" vor und ist damit quantitativ flotierbar; d.h. es sind frei schwimmende, feine Wachsteilchen vorhanden, die der Flotation zugänglich sind. Dies ist auch deswegen möglich, weil "freies Wachs" an sich hydrophob reagiert und damit die Voraussetzungen für die Flotation erfüllt.

Das Altpapier wird in einem Stofflöser bei hoher Temperatur aufgelöst, die mehr als 60°C beträgt und sogar um die 100 bis 120°C, d.h. bevorzugt 90 bis 120°C, betragen kann. Nach dieser Stufe 1 erfolgt eine Vorreinigung in einer Stufe 2A, z.B. in Hydrozyklonen (Rohrschleudern u.ä.) sowie eine Sortierung unter Umständen in Vertikalsichtern (Stufe 2C) und/oder auch in sogenannten Turboseparatoren (Stufe 2B). Im Stofflöser werden natürlich auch Chemikalien angewendet, wozu z.B. das übliche Natriumhydroxid und Sammlerchemikalien gehören. Vor der Flotation muß die Altpapiersuspension zunächst mit entsprechend vorgeheiztem Verdünnungswasser verdünnt werden, so daß die Flotation 3 bei der erforderlichen Temperatur, die zwischen 60 und 100°C, vorzugsweise zwischen 65 und 95°C liegen sollte, durchgeführt werden kann. Die entsprechenden Flotationschemikalien werden natürlich auch vorher zugegeben und sind bekannt, so daß sie hier nicht näher erläutert werden müssen. Es kann hier natürlich eine Anpassung an die speziellen Eigenschaften des Wachses erfolgen. Durch Leitung 5 strömt dann die gereinigte Suspension ab, während durch Leitung 6 das den wesentlichen Anteil an Wachsen enthaltende Reject abfließt. Die Reinigung dieses Rejects muß natürlich entsprechend angepaßt erfolgen, z.B. in einer Mikroflotation oder durch Fällung insbesondere der Wachsanteile.

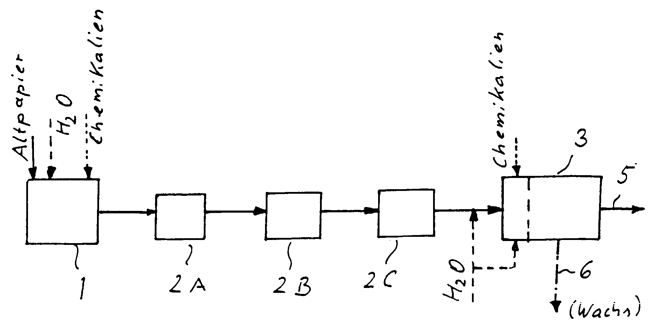

## Patentansprüche

1. Verfahren zur Aufbereitung von Altpapier, das zu einem starken Anteil wachsbeschichtet ist, dadurch gekennzeichnet, daß in einem Stofflöser das Altpapier bei einer Temperatur von mindestens 60°C zerlegt wird und daß nach einer Vorreinigung zur Abscheidung grober Verunreinigungen und gegebenenfalls Verdünnung mit entsprechend erwärmtem Wasser die Altpapiersuspension bei einer Temperatur zwischen 60 und 100°C flotiert wird, so daß ein großer Anteil des Wachses mit dem Flotat abgeschieden wird.

2. Verfahren nach Anspruch 1, dadurch gekennzeichnet, daß die Auflösung des Altpapiers im Stofflöser bei einer Temperatur zwischen 60 und 120°C erfolgt.

3. Verfahren nach Anspruch 1 oder 2, dadurch gekennzeichnet, daß eine mehrstufige Flotation angewendet wird.

4. Verfahren nach einem der Ansprüche 1 bis 3, dadurch gekennzeichnet, daß die Flotation bei Temperaturen zwischen 65 und 95°C stattfindet.

5. Verfahren nach einem der Ansprüche 1 bis 4, dadurch gekennzeichnet, daß das Altpapier im Stofflöser in einem Temperaturbereich zwischen 90° unc 120°C aufgelöst wird.

## Claims

1. Process for the treatment of waste paper a large portion of which is coated in wax, **characterised in that** the waste paper is decomposed in a material solvent at a temperature of at least 60°C, and that, following pre-cleansing for the purpose of separating large impurities and, if appropriate, diluting with suitably heated water, the waste paper suspension is floated at a temperature between 60 and 100°C so that a large portion of the wax is separated with the flotate.

2. Process according to Claim 1, **characterised in that** the solution of waste paper is dissolved in the material solvent at a temperature between 60 and 120°C.

3. Process according to Claim 1 or 2, **characterised in that** multistage flotation is applied.

4. Process according to one of Claims 1 to 3, **characterised in that** the flotation takes place at temperatures between 65 and 95°C.

5. Process according to one of Claims 1 to 4, **characterised in that** the waste paper is dissolved in the material solvent in a temperature range between 90° and 120°C.

## Revendications

1. Procédé de traitement de vieux papier, qui est enduit de cire en une proportion importante,
caractérisé en ce que
- le vieux papier est décomposé dans un broyeur à une température d'au moins 60°C,
- après un prénettoyage pour déposer des impuretés grossières et éventuellement une dilution avec de l'eau chauffée de manière correspondante, la suspension de vieux papier est flottée à une température comprise entre 60 et 100°C, de sorte qu'une grande partie de la cire est déposée avec le produit de flottation.

2. Procédé selon la revendication 1,
caractérisé en ce que
la dissolution du vieux papier dans le broyeur a lieu à une température comprise entre 60 et 120°C.

3. Procédé selon les revendications 1 ou 2,
caractérisé en ce qu'
on utilise une flottation en plusieurs étapes.

4. Procédé selon une des revendications 1 à 3,
caractérisé en ce que
la flottation a lieu à des températures comprises entre 65 et 95°C.

5. Procédé selon l'une des revendications 1 à 4,
caractérisé en ce que
le vieux papier est dissout dans le broyeur à un niveau de température compris entre 90 et 120°C.
